# FASCICULE DE BREVET EUROPEEN

(11) **EP 0 728 600 B1**
(45) Date de publication et mention de la délivrance du brevet: **27.10.1999**
(21) Numéro de dépôt: 96400380.0
(22) Date de dépôt: 23.02.1996
(51) Int. Cl.: B60D 1/40, B60D 1/36

(54) **Dispositif à crochet relevable pour le tractage de véhicules**
Vorrichtung mit einem zurückziehbaren Haken für das Abschleppen von Fahrzeugen
Device with a recractable hook for towing vehicles

(30) Priorité: 24.02.1995 FR 9502184
(43) Date de publication de la demande: 28.08.1996
(73) Titulaire: FRANS PATEER BV, 4564 ZG Saint Jansteen (NL)
(72) Inventeur: Rabu, Raymond, F-35470 Bain de Bretagne (FR)
(74) Mandataire: Wagret, Frédéric

(56) Documents cités:
- CA-A- 1 186 544
- DE-A- 4 120 119
- GB-A- 2 207 103
- US-A- 4 252 373

## Description

La présente invention concerne un dispositif à crochet relevable pour le tractage de véhicules, et notamment destiné à être fixé sur un tracteur (du type agricole par exemple), en vue du tractage de remorques ou engins à roues.

On connaît déjà des dispositifs du type à crochet relevable, pourvus d'un châssis ou bâti fixé sur le tracteur, d'un bras articulé sur le châssis selon un axe transversal et portant à son extrémité libre un crochet ou une pièce en U associée à une clavette. Le bras est d'abord abaissé puis, une fois le tracteur et la remorque disposés réciproquement de manière que le crochet soit disposé en dessous et en regard du timon de la remorque, le bras est relevé pour l'engagement du crochet et du timon.

Dans le brevet CA 1 186 544, le bras est monté pivotant à l'arrière du bâti et est susceptible de reposer sur des moyens de support prévus à l'avant du bâti. Le bras est apte à se rétracter en coulissant vers l'arrière du bâti :il faut, pour passer de la position en cours de fonctionnement à la position rétractée, enlever une goupille de fixation en position et remettre cette dernière dans une autre position.

Les dispositifs connus du type à commande hydraulique présentent, par rapport à ceux du type à commande mécanique, l'avantage d'une plus grande puissance et maniabilité, mais en revanche ils sont d'une hauteur totale plus grande (environ 270 mm), alors que ceux à commande mécanique ont une hauteur d'environ 150 mm.

De plus, les utilisateurs apprécient de pouvoir disposer d'un ensemble de tractage relevable qui soit non seulement fiable, facile à manoeuvrer, mais également de dimension réduite hors tractage, tout en étant de relative grande longueur de manière que le crochet dépasse du tracteur le plus en arrière possible (en position abaissée du bas), afin de permettre à l'utilisateur conduisant son tracteur de voir ledit crochet lors de la manoeuvre d'approche vers la remorque.

Par ailleurs, il est avantageux de pouvoir réaliser des dispositifs standards aptes à s'adapter sur la plupart des modèles de tracteurs, et sans modifications, notamment de la plaque support de prise d'huile.

La présente invention vise et a pour objet un dispositif qui réponde à ces conditions et satisfasse les critères ci-dessus.

A cette fin, selon l'invention, le dispositif pour l'accrochage de véhicules tractés, du type comportant :
- un bâti destiné à être fixé au véhicule de tractage ;
- un bras articulé par une extrémité selon un axe transversal sur ledit bâti, et dont la seconde extrémité libre est pourvue d' un organe d'accrochage/attelage (crochet) ;
- des moyens d'actionnement aptes à déplacer le bras entre une position relevée proche du bâti et une position abaissée ;
   est caractérisé en ce que le bras est relié au bâti par des moyens de liaison aptes à permettre une combinaison de déplacement du bras en translation longitudinale (direction de tractage) et de rotation selon un axe transversal.

Selon une forme préférée de réalisation, les moyens de liaison incluent une pièce de transmission en forme générale de L, dont une extrémité libre est articulée sur ledit bras, et dont l'autre extrémité libre est reliée de manière articulée auxdits moyens d'actionnement, ladite pièce en L étant articulée en son coude sur ledit bâti.

Avantageusement, l'articulation du bras sur le bâti est mobile en translation longitudinale.

De préférence, le bâti comporte une partie horizontale plane définissant un chemin le long duquel prend appui et se déplace l'extrémité articulée du bras (opposé au crochet).

Ledit chemin est sensiblement parallèle à la direction de tractage (horizontale).

L'extrémité du bras, opposé au crochet, est munie d'au moins un organe de déplacement, tel qu'un galet ou patin.

Préférentiellement, le bâti comporte deux chemins de roulement ou glissières et le bras est pourvu de deux galets de roulement latéraux.

De manière avantageuse, les moyens d'actionnement comportent un vérin hydraulique dont le fond de la chambre est monté articulé sur le bras, et l'extrémité libre du piston est fixée de manière articulée sur une extrémité libre de ladite pièce de transmission en L.

De préférence, l'articulation mobile du bras sur le bâti est commune avec l'articulation du vérin sur le bras.

Le bras est constitué d'un bloc parallélépipèdique, et deux pièces de transmission en L sont disposées latéralement articulées par un axe commun sur le bâti.

Les axes d'articulation des éléments sur le bâti sont disposés de manière que la pièce de transmission en L présente aux deux positions extrêmes du bras (relevée et abaissée), une branche sensiblement parallèle à la direction de tractage et une branche sensiblement perpendiculaire à ladite direction.

L'invention sera bien comprise à la lumière de la description qui suit se référant à un exemple illustratif mais non limitatif, en référence aux dessins annexés, dans lesquels :
- la figure 1 est une vue de côté du dispositif de l'invention en position relevée ;
- la figure 2 est une vue de côté en position abaissée du dispositif ;
- la figure 3 est une vue de face du dispositif de la figure 1 ;
- les figures 4 et 5 montrent une vue de côté, agrandie, de la partie arrière respective en position relevée et abaissée du bras ; et
- la figure 6 montre schématiquement le dispositif de la figure 1 en perspective.

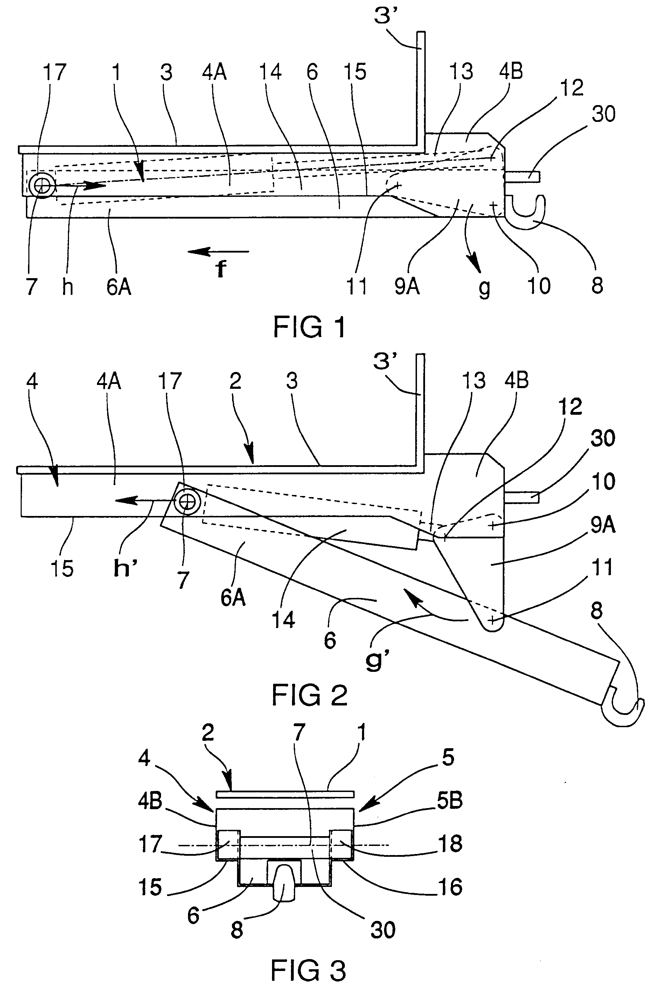

En référence à la figure 1, le dispositif comporte un bâti 1 destiné à être fixé (par tous moyens connus) sur un véhicule de tractage (tel qu'un tracteur agricole) non représenté. Le bâti 1 (décrit ci-après plus en détail) est associé, en vue de sa fixation au châssis du tracteur, une pièce intermédiaire 2 comprenant un plateau horizontal 3 et un retour perpendiculaire vertical 3'.

On entend par le terme "horizontal" une direction parallèle à la direction de tractage (flèche S), et par le terme "vertical" une direction perpendiculaire ou transversale à celle-ci.

Le bâti 1 comporte deux flancs latéraux 4 et 5 (figure 3) dont seul le flanc 4 est visible sur les vues de côté des figures 1 et 2. Chaque flanc comporte une partie arrière (côté tracteur) 4A longiligne et une partie avant 4B de forme générale quadrangulaire.

Un bras 6 est monté articulé sur la partie 4A du bâti 1 par une extrémité 6A (du côté du tracteur) autour d'un axe transversal 7. Le bras 6 comporte à son autre extrémité un crochet 8.

Le bras 6 est relié à la partie 4B du bâti 1, du côté du crochet 8, par l'intermédiaire de deux bielles de transmission 9 (seule la bielle 9A est visible) réalisée chacune sous la forme d'une plaque en forme générale de triangle, de préférence sensiblement rectangle. Les bielles 9 sont montées articulées au premier sommet du triangle, sur la partie 4B du bâti 1, selon un axe commun transversal 10, sur la paroi interne de la partie avant du flanc correspondant.

L'axe commun 10 est matérialisé par deux tourillons. Un second sommet du triangle formé par la bielle 9 est articulé selon un axe transversal 11 sur le bras 6, tandis que le troisième sommet de la bielle triangulaire 9 est relié de manière articulée, selon un axe transversal 12, à l'extrémité libre d'un piston 13 d'un vérin hydraulique dont la chambre porte la référence 14.

Le fond de la chambre 14 du vérin hydraulique (opposé au piston 13) est monté articulé, sur le bras 6, autour de l'axe transversal 7 d'articulation du bras 6 sur le bâti 1.

Les flancs latéraux 4 et 5 du bâti comportent chacun un retour horizontal 15 et 16 (figure 3) définissant, de part et d'autre du bras 6, un chemin de roulement, ou glissière, pour deux galets 17 et 18 montés libres autour de l'axe transversal commun 7. Les galets peuvent être remplacés par des patins.

Il est prévu sur la partie arrière du dispositif, et notamment entre les parties arrières 4B et 5B des flanc 4 et 5, une butée 30 fixée sur lesdits flancs (figure 3), et destinée à bloquer, en position relevée du bras (figure 1), l'anneau ou le timon de la remorque disposé dans le crochet 8, lors du tractage.

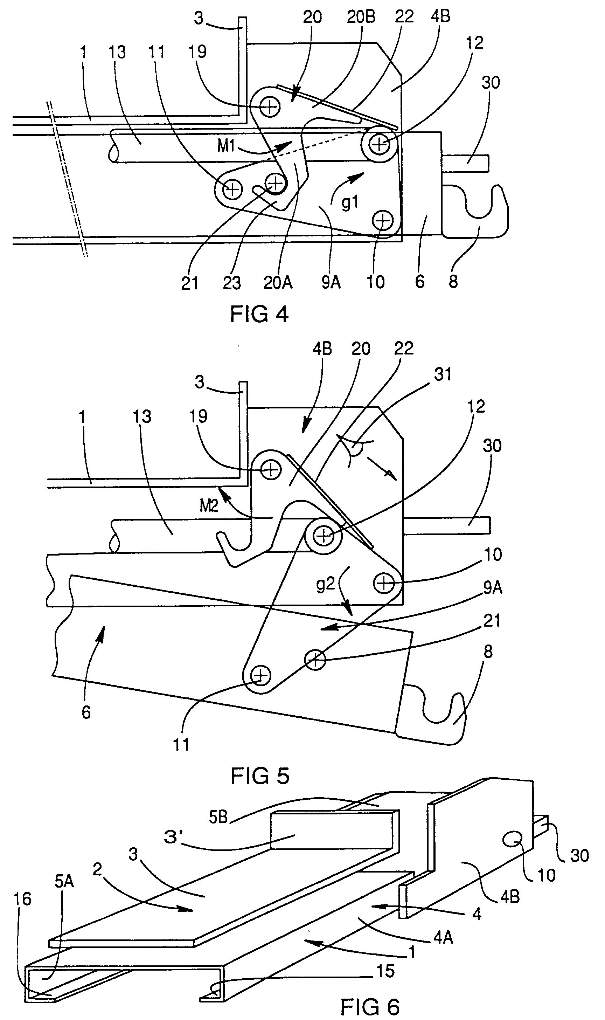

On a représenté sur les figures 4 et 5, une vue agrandie d'une variante de réalisation du dispositif, respectivement en position relevée et en position abaissée du bras.

La variante des figures 4 et 5 comporte un dispositif de blocage du bras 6 en position relevée, afin d'éviter un mouvement intempestif du bras 6, et donc du crochet 8, lors du tractage de remorque.

Les moyens de verrouillage comportent deux crochets de verrouillage en forme générale de S ou de Z. Les crochets 20 (dont un seul est visible, référence 20) sont montés articulés selon un axe transversal 19 sur la partie arrière 4B du bâti. Plus précisément, l'axe de rotation 19 des crochets 20 est disposé dans la partie supérieure (opposée au bras) et au-dessus (dans la direction verticale) du bras 6 en position relevée (voir figure 4). Les crochets 20 sont disposés de part et d'autres du vérin 13.

Les crochets 20 comportent deux branches 20A et 20B. Les crochets 20 sont articulés et disposés par rapport à l'axe de rotation 19, de manière que sa concavité soit tournée vers le crochet 8.

La branche inférieure 20A est munie à son extrémité d'un doigt 23 formant crochet et susceptible de coopérer avec un ergot ou téton 21 solidaire du bras 6. La seconde branche 20B, ou branche supérieure, est associée à une plaque 22, sensiblement horizontale ou légèrement inclinée par rapport à l'horizontale et de dimension transversale sensiblement équivalente à l'espacement séparant les flancs 4 et 5. La tôle ou plaque 22 présente une dimension dans la direction longitudinale, telle qu'elle obture au moins en grande partie l'espace entre les parties 4B et 5B des flancs 4 et 5, et plus précisément en obturant la partie du mécanisme incluant les bielles 9.

A titre d'exemple, les dimensions du dispositif sont les suivantes :
- longueur (hors crochet), en position relevée : 700 mm ;
- hauteur en position relevée : 150 mm ;
- recul arrière du crochet, en position abaissée : 200 mm.

Le fonctionnement du dispositif est le suivant.

Partant de la figure 1, le dispositif est en position relevée, pour laquelle le bras 6 est contre la partie 4A avant du bâti 1 et les galets 17 et 18 vers l'arrière, le piston 13 du vérin hydraulique est en position d'extension maximale.

Cette position est utilisée soit hors tractage, soit en cours de tractage.

L'utilisateur conduisant un tracteur muni du dispositif de l'invention, qui désire prendre en remorque un véhicule (remorque, machine agricole sur roues, ...), s'approche d'abord en marche arrière de la remorque, en position relevée du dispositif (figure 1).

A l'approche du timon de la remorque, l'utilisateur actionne le vérin hydraulique 13 de façon à lever le bras 6 afin de dégager les crochets 20 de l'axe 21. Le mouvement de rétractation du vérin 13 provoque dans un premier temps la translation vers l'arrière de l'axe de rotation 12 des pièces de transmission 9. Ce mouvement entraîne la rotation (flèche g) de ces dernières autour de leur axe commun 10.

Ce mouvement de rotation des pièces triangulaires 9 entraîne le déplacement en rotation du sommet desdites pièces associé à l'axe d'articulation 11 du bras 6 sur les pièces 9.

La rotation des pièces 9 entraîne un mouvement combiné de rotation du bras 6 autour de son axe transversal 7, et de translation (flèche h/figure 1) dans la direction inverse de tractage/remorquage, de ce même axe 7, et donc du bras 6.

Le mouvement de rétractation du piston 13 du vérin se poursuivant, on aboutit à la position extrême abaissée du bras, représentée sur la figure 2.

Le tracteur entame alors sa phase ultime de rapprochement du timon de la remorque jusqu'à ce que le crochet 8 soit disposé en regard et en dessous dudit timon (non représenté).

L'utilisateur actionne alors le vérin de façon à entraîner l'extension du piston 13, qui provoque le mouvement combiné inverse de celui décrit ci-dessus (flèche g' et h'). Au passage, le crochet 8 entre en prise avec le timon de la remorque.

Le dispositif revient à la position extrême relevée montrée sur la figure 1 ; l'anneau de la remorque est verrouillé par la butée 30 et le tractage peut commencer.

En référence aux figures 4 et 5, on explique ci-après le fonctionnement du dispositif incluant le moyen de verrouillage 20.

En partant de la position représentée sur la figure 4, c'est-à-dire correspondant à la position relevée du crochet, on suppose que l'utilisateur désire accrocher une remorque et s'approche donc, avec son tracteur, de celle-ci. Le bras ne peut être abaissé, dans la position représentée sur la figure 4, puisque le doigt 23 des crochets 20 est en prise avec l'ergot 21 fixé sur le bras 6. Ce dernier ne peut donc pas descendre vers sa position abaissée.

L'opérateur débloque le bras 6 en soulevant le crochet 20, par exemple en prenant prise sur la tôle supérieure 22. Les crochets 20 effectuent une rotation autour de leur axe 19 qui libère le doigt 23 de l'ergot 21.

L'opération de descente ou d'abaissement du bras 6 peut alors s'effectuer, de la manière décrite ci-dessus, en référence aux figures 1, 2 et 3.

Le mouvement descendant du bras 6 (figure 5) et le mouvement de rotation de la bielle 9A autour de l'axe 10 (flèche g2), provoquent par contact de l'axe d'articulation 12 avec la tôle 22, la rotation des crochets 20 selon la flèche M2, autour de l'axe d'articulation 19. La tôle 22 se trouve donc en position inclinée et dégage ainsi la visibilité pour l'opérateur dont l'oeil est symbolisé de manière schématique par la référence 31. L'utilisateur situé sur le tracteur dispose ainsi d'une bonne visibilité du crochet 8, compte tenu d'une part du recul du crochet 8, comme indiqué précédemment, et d'autre part du dégagement de visibilité entre les parties arrières 4B et 5B des flancs latéraux, et entre lesquelles se situe le champ de vision donnant accès au crochet 8.

Une fois le tracteur disposé de manière que le crochet 8 soit disposé en regard et en dessous du timon ou de l'anneau de la remorque, le bras 6 est relevé de la manière décrite précédemment en référence aux figures 1 à 3. Le bras 6 amorce sa remontée, et la bielle 9A amorce un mouvement de rotation (flèche g1), comme montré sur la figure 4, autour de l'axe d'articulation 10 sur le bras 6.

L'axe d'articulation 12 porte contre la tôle supérieure 22 et repousse celle-ci, et donc l'ensemble crochets 20, autour de l'axe d'articulation 19, selon la flèche m1 (figure 4). Ce mouvement de rotation de l'ensemble crochets 20 permet à ce dernier de prendre une position telle que le doigt 23 dépasse l'ergot 21. Une fois le mouvement du bras 6 terminé vers sa position haute (figure 4), l'ensemble crochets 20 est disposé à nouveau dans une position telle que le doigt 23 prenne prise avec l'ergot 21.

Le dispositif offre les avantages suivants, par rapport aux dispositifs de l'art antérieur :
- recul important (200 mm) du crochet de tractage (8) vers l'arrière, en position abaissée, pour une meilleure visibilité de celui-ci lors de la manoeuvre d'approche ;
- simplification de fabrication et d'utilisation puisque les tringles de relevage sont supprimées ;
- épaisseur (hauteur) totale minimale (150 mm) en position relevée, et très inférieure aux dispositifs hydrauliques connus ; et
- facilité d'adaptation du dispositif à l'ensemble des différents types de tracteur sans modifications, notamment du support de plaque de prise d'huile, des axes de chandelles des bras de levage, de la course des chandelles.

L'invention n'est pas limitée au mode de réalisation décrit, mais inclut au contraire toute variante.

## Revendications

1. Dispositif pour l'accrochage de véhicules tractés (tels que remorques), du type comportant :
* un bâti (1, 4, 5) destiné à être fixé au véhicule de tractage ;
* un bras (6) articulé par une extrémité selon un axe transversal (7) sur ledit bâti, et dont la seconde extrémité libre est pourvue d'un organe d'accrochage/attelage (crochet) (8) ; le bras étant mobile entre une position relevée proche du bâti et une position abaissée;
* des moyens de liaison du bras avec le bâti aptes à permettre une combinaison de déplacement du bras en translation et en rotation selon un axe transversal à la direction de tractage;
caractérisé en ce que les moyens de liaison incluent au moins une bielle de transmission (9A) en forme générale de L, dont une extrémité libre est articulée (11) sur ledit bras, et dont l'autre extrémité libre est reliée de manière articulée (12) à des moyens d'actionnement (13-14), ladite bielle en L étant articulée (10) sur ledit bâti en son coude.

2. Dispositif selon la revendication 1 , caractérisé en ce que l'articulation (7) du bras (6) sur le bâti (1) est mobile en translation longitudinale (h').

3. Dispositif selon l'une des revendications précédentes, caractérisé en ce que le bâti (1) comporte une partie horizontale plane définissant un chemin (15-16) le long duquel prend appui et se déplace l'extrémité articulée du bras (6) (opposé au crochet) (8).

4. Dispositif selon la revendication précédente, caractérisé en ce que ledit chemin est sensiblement parallèle à la direction de tractage (f) (horizontale).

5. Dispositif selon l'une des revendications précédentes, caractérisé en ce que l'extrémité du bras, opposée au crochet (8), est munie d'au moins un organe de déplacement, tel qu'un galet ou un patin.

6. Dispositif selon la revendication précédente, caractérisé en ce que le bâti (1) comporte deux chemins de roulement (15-16)et le bras (6) est pourvu de deux galets (17-18)de roulement latéraux.

7. Dispositif selon l'une des revendications 1 à 6, caractérisé en ce que les moyens d'actionnement comportent un vérin hydraulique dont le fond de la chambre (14) est monté articulé sur le bras (6), et l'extrémité libre du piston (13) est fixée de manière articulée sur une extrémité libre de ladite bielle (9A).

8. Dispositif selon l'une des revendications précédentes, caractérisé en ce que l'articulation (7) mobile du bras (6) sur le bâti (1) est commune avec l'articulation du vérin (14) sur le bras (6).

9. Dispositif selon l'une des revendications 1 à 8, caractérisé en ce que ledit bras (6) est constitué d'un bloc parallélépipèdique, et deux bielles de transmission (9) en L sont disposées latéralement articulées par un axe commun sur le bâti.

10. Dispositif selon l'une des revendications précédentes, caractérisé en ce qu'il comporte des moyens de verrouillage du bras en position relevée, lesdits moyens comportant une pièce en forme de S ou de Z (20), articulée en son coude sur le bâti, et dont l'extrémité d'une des branches comporte un doigt (23) apte à coopérer avec un ergot (21) solidaire du bras.

11. Dispositif selon la revendication précédente, caractérisé en ce que les moyens de blocage comportent un panneau (22) apte à obturer au moins partiellement l'espace entre deux flancs latéraux du bâti.

## Claims

1. Device for hooking towed vehicles (such as trailers), of the type comprising:
- a frame (1, 4, 5) intended to be fixed to the towing vehicle,
- an arm (6) articulated by one end about a transverse pin (7) on said arm, and of which the second free end is provided with a hooking/coupling member (hook) (8); the arm being mobile between a raised position close to the frame and a lowered position,
- means for connecting the arm with the frame, adapted to allow a combination of displacement of the arm in translation and in rotation about an axis transverse to the direction of towing,
characterized in that the connecting means include at least one transmission rod (9A) in the general form of an L, of which one free end is articulated (11) on said arm, and of which the other free end is connected in articulated manner (12) to actuation means (13-14), said L-shaped rod being articulated (10) on said frame at its bend.

2. Device according to Claim 1, characterized in that the articulation (7) of the arm (6) on the frame (1) is mobile in longitudinal translation (h').

3. Device according to one of the preceding Claims, characterized in that the frame (1) comprises a plane horizontal part defining a path (15-16) along which the articulated end of the arm (6) (opposite the hook) (8) bears and moves.

4. Device according to the preceding Claim, characterized in that said path is substantially parallel to the direction of towing (f) (horizontal).

5. Device according to one of the preceding Claims, characterized in that the end of the arm opposite the hook (8) is provided with at least one displacement member, such as a roller or a shoe.

6. Device according to the preceding Claim, characterized in that the frame (1) comprises two runways (15-16) and the arm (6) is provided with two lateral rollers (17-18).

7. Device according to one of Claims 1 to 6, characterized in that the actuation means comprise a hydraulic jack of which the bottom of the chamber (14) is mounted articulated on the arm (6), and the free end of the piston (13) is fixed in articulated manner on a free end of said rod (9A).

8. Device according to one of the preceding Claims, characterized in that the mobile articulation (7) of the arm (6) on the frame (1) is common with the articulation of the jack (14) on the arm (6).

9. Device according to one of Claims 1 to 8, characterized in that said arm (6) is constituted by a parallelepipedic unit, and two L-shaped transmission rods (9) are disposed laterally articulated by a common pin on the frame.

10. Device according to one of the preceding Claims, characterized in that it comprises means for locking the arm in raised position, said means comprising a part (20) in the form of an S or Z, articulated at its bend on the frame, and of which the end of one of the arms comprises a finger (23) adapted to cooperate with a catch (21) fast with the arm.

11. Device according to the preceding Claim, characterized in that the blocking means comprise a panel (22) adapted to obturate at least partially the space between two lateral sides of the frame.

## Patentansprüche

1. Vorrichtung zum Anhängen von gezogenen Fahrzeugen (wie Anhängern) des Typs, welcher aufweist:
* ein Gestell (1, 4, 5), das dazu bestimmt ist, am Zugfahrzeug befestigt zu werden:
* einen Arm (6), der mit einem Ende gemäß einer Querachse (7) am Gestell gelenkig angebracht ist und dessen zweites freies Ende mit einem Anhänge/Ankuppel-Element (Haken) (8) versehen ist; wobei der Arm zwischen einer angehobenen Position nahe dem Gestell und einer herabgelassen Position beweglich ist;
* Mittel zur Verbindung des Armes mit dem Gestell, die fähig sind, eine Kombination der Verschiebung des Armes in Translation und in Rotation gemäß einer Achse zu gestatten, die quer zur Zugrichtung ist;
**dadurch gekennzeichnet,** dass die Verbindungsmittel wenigstens ein Transmissionsglied (9A) mit allgemeiner L-Form beinhalten, dessen eines freies Ende am Arm gelenkig angebracht ist (11) und dessen anderes freies Ende mit Betätigungsmitteln (13-14) gelenkig verbunden ist (12), wobei das L-förmige Glied an seiner Krümmung am Gestell gelenkig angebracht ist (10).

2. Vorrichtung nach Anspruch 1, dadurch gekennzeichnet, dass die Gelenkverbindung (7) des Armes (6) mit dem Gestell (1) in Längstranslation (h') beweglich ist.

3. Vorrichtung nach einem der vorhergehenden Ansprüche, dadurch gekennzeichnet, dass das Gestell (1) einen ebenen horizontalen Teil aufweist, der einen Weg (15-16) definiert, entlang dessen sich das gelenkig angebrachte Ende des Armes (6) (entgegengesetzt dem Haken) (8) abstützt und verschiebt.

4. Vorrichtung nach dem vorhergehenden Anspruch, dadurch gekennzeichnet, dass der Weg zur Zugrichtung (f) (horizontal) im Wesentlichen parallel ist.

5. Vorrichtung nach einem der vorhergehenden Ansprüche, dadurch gekennzeichnet, dass das Ende des Armes, das dem Haken (8) entgegengesetzt ist, mit wenigstens einem Verschiebungselement, wie einer Rolle oder einem Gleitschuh, versehen ist.

6. Vorrichtung nach dem vorhergehenden Anspruch, dadurch gekennzeichnet, dass das Gestell (1) zwei Rollwege (15-16) aufweist und der Arm (6) mit zwei seitlichen Laufrollen (17-18) versehen ist.

7. Vorrichtung nach einem der Ansprüche 1 bis 6, dadurch gekennzeichnet, dass die Betätigungsmittel einen Hydraulikzylinder aufweisen, wovon der Boden der Kammer (14) am Arm (6) gelenkig angebracht ist und das freie Ende des Kolbens (13) an einem freien Ende des Glieds (9A) gelenkig befestigt ist.

8. Vorrichtung nach einem der vorhergehenden Ansprüche, dadurch gekennzeichnet, dass die bewegliche Gelenkverbindung (7) des Armes (8) am Gestell (1) mit der Gelenkverbindung des Kolbens (14) am Arm (6) gemeinsam ist.

9. Vorrichtung nach einem der Ansprüche 1 bis 8, dadurch gekennzeichnet, dass der Arm (6) aus einem parallelepipedischen Block besteht und zwei L-förmige Transmissionsglieder (1) durch eine gemeinsame Achse am Gestell seitlich gelenkig angebracht sind.

10. Vorrichtung nach einem der vorhergehenden Ansprüche, dadurch gekennzeichnet, dass sie Mittel zur Verriegelung des Armes in angehobener Position aufweist, wobei diese Mittel ein Teil in S- oder Z-Form (20) aufweisen, das an seiner Krümmung am Gestell angebracht ist und wovon das Ende eines der Arme eine Klaue (23) aufweist, die fähig ist, mit einem mit dem Arm fest verbundenen Stift (21) zusammenzuarbeiten.

11. Vorrichtung nach dem vorhergehenden Anspruch, dadurch gekennzeichnet, dass die Blockierungsmittel eine Platte (22) aufweisen, die fähig ist, den Raum zwischen zwei Seitenflanken des Gestells wenigstens teilweise zu verschließen.
